(19) Europäisches Patentamt
European Patent Office
Office européen des brevets

(11) **EP 3 356 766 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(21) Anmeldenummer: **16778701.9**

(22) Anmeldetag: **20.09.2016**

(51) Internationale Patentklassifikation (IPC):
**G01C 21/32** (2006.01)    **G01C 21/00** (2006.01)

(52) Gemeinsame Patentklassifikation (CPC):
**G01C 21/3819**

(86) Internationale Anmeldenummer:
**PCT/EP2016/072313**

(87) Internationale Veröffentlichungsnummer:
**WO 2017/055138 (06.04.2017 Gazette 2017/14)**

(54) **VERFAHREN ZUM AKTUALISIEREN EINER ELEKTRONISCHEN KARTE EINES FAHRZEUGS**

METHOD FOR UPDATING AN ELECTRONIC CARD OF A VEHICLE

PROCÉDÉ POUR METTRE À JOUR UNE CARTE ÉLECTRONIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2015 DE 102015218809**

(43) Veröffentlichungstag der Anmeldung:
**08.08.2018 Patentblatt 2018/32**

(73) Patentinhaber: **AUMOVIO Germany GmbH**
**60488 Frankfurt am Main (DE)**

(72) Erfinder:
• STÄHLIN, Ulrich
65760 Eschborn (DE)
• MENZEL, Marc
35096 Weimar (Lahn) (DE)
• SCHERPING, Richard
65835 Liederbach am Taunus (DE)

(74) Vertreter: **Aumovio Corporation**
**AUMOVIO Germany GmbH**
**Taunusstraße 36**
**80807 München (DE)**

(56) Entgegenhaltungen:
EP-A1- 2 555 569      EP-A2- 0 921 509
DE-A1- 102007 006 870   DE-A1- 102010 012 877
FR-A1- 2 997 183

• WORRALL S ET AL: "A probabilistic method for detecting impending vehicle interactions", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19 May 2008 (2008-05-19), pages 1787 - 1791, XP031340411, ISBN: 978-1-4244-1646-2

**Beschreibung**

Die Erfindung betrifft ein Verfahren zum Aktualisieren einer elektronischen Karte eines Fahrzeugs

Elektronische Karten werden in Fahrzeugen insbesondere für Navigationszwecke und zur Fahrzeug-zu-X-Kommunikation benötigt. Eine solche Fahrzeug-zu-X-Kommunikation, auch als Car2X-, C2X- oder V2X-Kommunikation bezeichnet, basiert insbesondere auf dem Standard IEEE 802.11p. Dies ist Stand der Forschung bzw. Vorentwicklung und befindet sich zurzeit in der Standardisierung. Ebenso sind selbstgelernte Karten oder ein Road Graph auf Basis von aktuellen Informationen aus einer Fahrzeug-zu-X-Kommunikation Stand der Forschung.

Durch Karteninformationen können zahlreiche Funktionen verbessert werden. Hierfür wird typischerweise Kartenmaterial verwendet, welches jedoch teuer und nur aufwändig auf dem aktuellen Stand zu halten ist. Außerdem werden große Datenmengen benötigt, auch wenn ein typisches Fahrzeug die größten Teilbereiche seiner Karte nie benötigen wird, weil es sich nie in der damit beschriebenen Region befindet.

Aus der FR 2 997 183 A1 geht ein Verfahren zur Aktualisierung von kartierter bzw. nicht kartierter Kreisverkehre hervor, wobei ein Vergleich einer bereits gefahrenen Trajektorie mit einem anhand vorhandener Kartendaten eigentlich für den betreffenden Wegabschnitt erwartetem Bewegungsmuster erfolgt. Aus den Druckschriften EP 0 921 509 A2 und DE 10 2007 006870 A1 gehen weitere artverwandte Verfahren hervor.

Es ist deshalb wünschenswert, ein Verfahren vorzusehen, welches den Umgang mit solchen Karten vereinfacht.

Dies wird erfindungsgemäß durch ein Verfahren nach Anspruch 1 gelöst. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein Verfahren zum Aktualisieren einer elektronischen Karte eines Fahrzeugs, wobei das Verfahren folgende Schritte aufweist:

- Berechnen eines prädizierten Zustands des Fahrzeugs,
- Ermitteln eines tatsächlichen Zustands des Fahrzeugs,
- Bestimmen einer Abweichung zwischen prädiziertem Zustand und tatsächlichem Zustand, und
- Speichern von Informationen in die Karte, wenn prädizierter Zustand und tatsächlicher Zustand voneinander abweichen,

wobei der prädizierte Zustand basierend auf der Karte und auf Bewegungsdaten des Fahrzeugs, nämlich Position, Geschwindigkeit und/oder Beschleunigung des Fahrzeugs, berechnet wird, wobei der Zustand ein Weg des Fahrzeugs ist, wobei der tatsächliche Weg basierend auf Bewegungsdaten des Fahrzeugs, nämlich Position, Geschwindigkeit und/oder Beschleunigung, ermittelt wird und wobei die Informationen angepasste Werte beinhalten oder sind, mit welchen der prädizierte Weg dem tatsächlichen Weg entsprechen würde.

Die Erfindung basiert grundsätzlich auf der Idee, eine Karte im Fahrzeug zu lernen und für die spätere Verwendung zu speichern. Dabei werden grundsätzlich lediglich diejenigen Informationen gespeichert, welche zu Abweichungen im Verhalten von Funktionen, beispielsweise Zuständen, oder von Bewegungsdaten, zu einer Prädiktion ohne Karte führen. Dies ermöglicht zum einen eine selbstständige Erstellung einer elektronischen Karte in einem Fahrzeug, ohne dass dafür auf gekauftes oder sonst extern beschafftes Datenmaterial zurückgegriffen werden muss. Des Weiteren wird durch die Reduktion auf Informationen, welche zu Abweichungen zwischen einem prädizierten Zustand und einem tatsächlichen Zustand geführt haben, die insgesamt zu speichernde Datenmenge deutlich verringert.

Bei einem Weg handelt es sich typischerweise um eine Größe, welche während der Fahrt laufend aufgezeichnet, berechnet und verglichen werden kann. Außerdem handelt es sich bei einem gefahrenen Weg des Fahrzeugs um einen sehr zuverlässigen Indikator für einen Streckenverlauf einer Straße.

Der prädizierte Zustand wird basierend auf der Karte berechnet. Dies ist insbesondere dann der Fall, wenn hierfür relevante Informationen in der Karte vorhanden sind. Damit können vorteilhaft Informationen in der Karte ermittelt werden, welche zu einem prädizierten Verhalten führen, das vom realen Verhalten abweicht. Damit wird gezielt Aktualisierungsbedarf in der Karte ermittelt.

Der prädizierte Zustand wird basierend auf Position, Geschwindigkeit und/oder Beschleunigung des Fahrzeugs berechnet. Derartige Bewegungsdaten haben sich als vorteilhaft zum Prädizieren insbesondere eines Wegs oder auch anderer Zustände wie beispielsweise erwarteten Kollisionen als vorteilhaft herausgestellt.

Der prädizierte Zustand kann zusätzlich basierend auf Daten von anderen Fahrzeugen und/oder basierend auf Daten über eine Umgebung des Fahrzeugs, insbesondere von Umfeldsensoren und/oder Fahrzeug-zu-X-Kommunikation, berechnet werden. Auch derartige Daten haben sich zum Prädizieren eines Zustands wie insbesondere eines Wegs als vorteilhaft erwiesen.

Der prädizierte Zustand kann insbesondere unter Verwendung eines oder mehrerer der folgenden Prädiktionsmodelle berechnet werden:

- Kinematisches Modell 1. Ordnung (Constant Velocity, CV)
- Kinematisches Modell 2. Ordnung (Constant Acceleration, CA)
- Constant Turn Rate and Velocity (CTRV)

- Constant Turn Rate and Acceleration (CTRA)
- Constant Steering Angle and Velocity (CSAV)
- Constant Steering Angle and Acceleration (CSAA)
- Prädiktionsmodell mit geschätztem Krümmungsverlauf, insbesondere aus einer Gierrate
- Manöverabhängige Prädiktion
- Neuronales Netz
- Support Vector Machine
- Polynom n-ten Grades
- Stillstandsvorhersage.

Ein kinematisches Modell erster Ordnung kann insbesondere auf folgender Formel basieren:

$$x(T) = x(0) + v \cdot T$$

Dabei bezeichnen:

x: Wegstrecke
T: Zeit
v: Geschwindigkeit

Ein kinematisches Modell zweiter Ordnung kann insbesondere auf folgender Formel basieren:

$$x(T) = x(0) + v \cdot T + 0{,}5 \cdot a \cdot T^2$$

Dabei bezeichnet zusätzlich:
a: Beschleunigung
Ein Prädiktionsmodell mit geschätztem Krümmungsverlauf kann insbesondere auf folgender Formel basieren:

$$\Delta\psi(T) = \dot{\psi}T$$

Mit ψ wird hier der Gierwinkel bezeichnet, welcher typischerweise aus der Gierrate ermittelt wird, die in jedem typischen Fahrzeug mit ESC (Elektronischer Stabilitätskontrolle) als Messgröße vorhanden ist.
Aus diesen Prädiktionsmodellen kann je nach Situation und je nach zur Verfügung stehenden Daten sowie je nach zur Verfügung stehender Rechenleistung ein jeweils geeignetes Prädiktionsmodell ausgewählt werden, um einen Zustand wie insbesondere einen Weg zu prädizieren.
Der tatsächliche Zustand wird basierend auf Bewegungsdaten des Fahrzeugs, nämlich Position, Geschwindigkeit und/oder Beschleunigung, ermittelt. Der tatsächliche Zustand kann auch zusätzlich basierend auf Daten von anderen Fahrzeugen und/oder basierend auf Daten über eine Umgebung des Fahrzeugs, insbesondere von Umfeldsensoren und/oder Fahrzeug-zu-X-Kommunikation, ermittelt werden. Derartige Daten haben sich für die Berechnung eines tatsächlichen Zustands, insbesondere eines tatsächlich von einem Fahrzeug gefahrenen Wegs, als vorteilhaft erwiesen.
Bevorzugt weist das Verfahren ferner einen Schritt des Ermittelns der Informationen basierend auf der Abweichung auf. Dies erlaubt es, die Informationen, mit welchen die Karte aktualisiert wird, in Abhängigkeit von der Abweichung zu ermitteln. Damit kann die Karte so aktualisiert werden, dass Abweichungen in Zukunft möglichst vermieden werden.
Der Schritt des Speicherns von Informationen kann gemäß einer Weiterbildung nur dann ausgeführt werden, wenn die Abweichung einen Schwellenwert überschreitet. Dies vermeidet eine übermäßige Belastung der Rechenkapazität und der Datenübertragungskapazität zur Karte, da Informationen nur dann in die Karte gespeichert werden, wenn die Größe der Abweichung anzeigt, dass ein Aktualisieren auch tatsächlich notwendig ist.
Erfindungsgemäß beinhalten oder sind die Informationen, angepasste Werte, mit welchen der prädizierte Zustand dem tatsächlichen Zustand entsprechen würde. Derartige Informationen können insbesondere aus der Abweichung rückgerechnet werden. Damit wird die Karte in einer Art und Weise aktualisiert, dass bei der nächsten Verwendung der entsprechenden Informationen bzw. Daten keine Abweichung mehr auftreten sollte.
Die Informationen können insbesondere mögliche Wege an einer Verzweigung, insbesondere einschließlich vorheriger Aufteilung, beinhalten. Damit kann beispielsweise ermittelt werden, dass an einer Kreuzung mehrere Spuren vorhanden sind, welche unterschiedlichen Fahrtrichtungen zugeordnet sind. Beispielhaft ist hierfür eine typische Abbiegespur zu nennen. Es kann also mittels des Verfahrens beispielsweise erkannt werden, dass sich ein Fahrzeug grundsätzlich auf einer Links- oder Rechtsabbiegerspur befindet, bevor es nach links oder rechts abbiegt. Außerdem kann erkannt werden, dass sich ein Fahrzeug grundsätzlich auf einer Spur für den geradeaus fahrenden Verkehr befindet, wenn es geradeaus weiterfährt. Dies erlaubt in späteren Fällen eine noch bessere Vorausberechnung des Wegs und des Verhaltens eines Fahrzeugs, da beispielsweise ein Wechseln auf eine spezielle Fahrspur für Abbiegemanöver auch dann erkannt werden kann, wenn der Fahrer es versäumt, einen Blinker zu setzen.
In der Karte können insbesondere Hinweise auf Regionen mit gespeicherten Informationen gespeichert werden. Damit kann bereits zu einem frühen Stadium der Informationsverwertung bestimmt werden, ob in einer Karte relevante Informationen vorhanden sind, welche auszulesen und zu berücksichtigen sind. Beispielsweise können entsprechende Flags gesetzt werden.
In der Karte können auch mit den Informationen Hinweise zur Speicherzeit, zu einer Anzahl von Bestätigungen, zu einem Integritätslevel und/oder zum Ursprung einer Information oder Bestätigung gespeichert werden. Dies erlaubt einen vorteilhaften Rückschluss, wie zuverlässig eine Information ist.
Ein Integritätslevel kann basierend auf einem Vergleich einer basierend auf den Informationen erstellten Karte mit einer anderen Karte ermittelt wird. Bei der anderen Karte kann es sich insbesondere um eine ursprünglich im Fahrzeug vorhandene, beispielsweise bei Auslieferung einprogrammierte Karte oder eine von einer CD, einer ähnlichen Datenquelle oder einem Internet-Server geladenen Karte handeln. Damit kann insbesondere ermittelt werden, wie gut eine basierend auf den Informationen erstellte Karte, also eine gelernte Karte, mit einer anderen Karte übereinstimmt. Bei hoher Übereinstimmung kann insbesondere ein hoher Integritätslevel ermittelt werden, und umgekehrt.

Es kann damit insbesondere auch ein Verfahren zur Ermittlung eines Integritätslevels auf Basis des Vergleichs von Informationen einer vorhandenen Karte mit gelernten Informationen durchgeführt werden. Ein solcher ermittelter Integritätslevel kann vorteilhaft in den sonstigen hierin beschriebenen Verfahrensaspekten verwendet werden. Beispielsweise kann eine Warnung vor einem Gefahrenzustand unterlassen werden, wenn die Daten, auf welchen eine Berechnung eines voraussichtlich gefahrlosen Zustands basiert, einen hohen Integritätslevel aufweisen. Es sei verstanden, dass ein solches Verfahren zur Ermittlung eines Integritätslevels einen eigenständigen Erfindungsaspekt darstellt. Dieser kann jedoch auch mit den anderen hierin offenbarten Verfahrensaspekten beliebig kombiniert werden.

Die Karte beinhaltet vorteilhaft eine Straßentopologie, welche insbesondere um die Informationen angereichert werden kann. Damit kann in der Karte der übliche Verlauf von Straßen angegeben werden, was beispielsweise auch für Navigationszwecke verwendet werden kann. Es sei jedoch erwähnt, dass alternativ auch eine Karte basierend auf abstrakten Daten erstellt bzw. definiert werden kann, welche lediglich die Informationen beinhaltet, welche zur Prädiktion im Rahmen des erfindungsgemäßen Verfahrens verwendet werden. Dabei kann insbesondere auf die Erstellung von topografisch nachvollziehbaren Informationen verzichtet werden. Derartige Karten können dann typischerweise nur in Verbindung mit dem erfindungsgemäßen Verfahren verwendet werden, insbesondere auch nur im Zusammenhang mit weiteren Daten wie beispielsweise Bewegungsdaten des Fahrzeugs.

Im Rahmen des erfindungsgemäßen Verfahrens können sowohl die eigenen Bewegungsdaten wie Position, Geschwindigkeiten oder Beschleunigungen, als auch Daten von anderen Fahrzeugen, beispielsweise ermittelt über Umfeldsensoren oder Fahrzeug-zu-X-Kommunikation, sowie Daten über die Umgebung, beispielsweise ermittelt über Umfeldsensoren oder Fahrzeug-zu-X-Kommunikation, verwendet werden. Idealerweise werden dabei die eigenen Bewegungsdaten als Basis verwendet, da diese immer verfügbar sind. Sollen die Daten vor allem für Fahrzeug-zu-X-Anwendungen verwendet werden, so sind auch diese Eingangsdaten typischerweise vorhanden und werden daher grundsätzlich verwendet. Daten aus Umfeldsensoren und Kartenmaterial, z.B. von einem e-Horizon, sind demgegenüber ausstattungsabhängig und können optional verwendet werden.

Um die Datenbankgröße einer Karte klein zu halten, wird vorzugsweise nicht die Karte der kompletten gefahrene Strecke gelernt. Stattdessen wird vorzugsweise zu jedem Zeitpunkt eine Prädiktion der Bewegung des Fahrzeugs durchgeführt und temporär gespeichert. Zu jedem Zeitpunkt wird nun die aktuelle Position mit der zugehörigen Prädiktion verglichen. Nur wenn die Abweichung einen Schwellwert überschreitet wird die entsprechende Position in der Karte gespeichert. Idealerweise werden dabei nur die angepassten Werte für eine Prädiktion gespeichert, d.h. mit welchen Parametern die Prädiktion doch wieder richtig wäre. Damit ist es einerseits möglich, eine deutlich präzisere Prädiktion zu erhalten als ohne Karte und andererseits mit deutlich weniger Informationen in der Karte auszukommen als bei einer vollständigen Karte.

Das Konzept kann auch erweitert werden, indem nicht nur gespeichert wird, wo die Prädiktion der Bewegung eines Fahrzeugs (eigenes Fahrzeug oder Fahrzeuge in der Umgebung) nicht der eigentlichen Modellannahme entspricht, sondern wo eine Abweichung von der Anwendungslogik auftritt. Das kann z.B. an einer Überführung der Fall sein, wo die Anwendung fälschlicherweise annehmen könnte, dass es sich um eine Kreuzung handelt. Für beide sich kreuzende Strecken ist die jeweilige Prädiktion der Bewegung aus dem Prädiktionsmodell jeweils richtig, jedoch ist die Höhenunterscheidung u.U. nicht einfach darstellbar. Lernt die Karte jedoch, dass sich die Fahrzeuge an der Stelle kreuzen können, ohne zu kollidieren, kann das entsprechend gespeichert werden, weil das der eigentlichen Anwendungslogik widerspricht.

Als Prädiktionsmodelle sind unterschiedliche, an sich bekannte Algorithmen verwendbar, beispielsweise

- Kinematisches Modell 1. Ordnung: $x(T) = x(0) + v*T$ (Constant Velocity, CV)
- Kinematisches Modell 2. Ordnung: $x(T) = x(0) + v*T + 0.5*a*T^2$ (Constant Acceleration, CA)
- Constant Turn Rate and Velocity (CTRV)
- Constant Turn Rate and Acceleration (CTRA)
- Constant Steering Angle and Velocity (CSAV)
- Constant Steering Angle and Acceleration (CSAA)
- Prädiktionsmodell mit geschätztem Krümmungsverlauf (z.B. aus der Gierrate): $\Delta\psi(T)=(\psi T)^{\cdot}$
- Manöverabhängige Prädiktionen
- Neuronale Netze
- Support Vector Machines
- Polynome n-ten Grades.

Die kinematischen Modelle können dabei beispielsweise 1-dimensional oder 2-dimensional gestaltet werden (auch in Mischform, also in y-Richtung beispielsweise 2. Ordnung und in x-Richtung 1. Ordnung oder umgekehrt). Zusätzlich kann eine Stillstandsvorhersage verwendet werden, damit keine abrupte Rückwärtsfahrt prädiziert wird.

Sämtliche anderen Modelle können auch mehrdimensional ausgestaltet werden.

Als weitere Information für Anwendungen kann gespeichert werden, welche möglichen Pfade ein Fahrzeug an einer Verzweigungsstelle nehmen kann und ob sich diese Pfade schon vorher aufteilen, um dadurch die Prädiktionsauswahl zu erleichtern. Beispielsweise befinden sich an Kreuzungen typischerweise unterschiedliche Spuren für Geradeausverkehr, Links- oder Rechtsabbieger. Wird gelernt, welche Spur für welche Fahrtrichtung verwendet wird, kann auch ohne Verwendung des Blinkers erkannt werden, welche Prädiktion für die Kreuzung verwendet werden sollte. Das ist vor allem für Linksabbiegeassistenten wichtig, wo vielfach die sonst notwendige Blinkerinformation fehlt.

Für den Fall, dass eine digitale Karte (z.B. eHorizon, Navigation, etc.) als Quelle für die Prädiktion verwendet wird, ist es günstig, solche Teile der Karte, die unbekannt sind, von denen zu unterscheiden, wo der Prädiktor passt, und grundsätzlich zu speichern, falls für eine Region Informationen vorliegen. Das kann jedoch platzsparend erfolgen, indem nur ein Flag gesetzt wird. Für den Fall, dass keine digitale Karte die Speicherung vornimmt, kann durch eine Positivliste im Laufe der Zeit eine eigene Karte entstehen, die dann auch entsprechend genutzt werden kann, um z.B. eHorizon-Funktionen zu unterstützen, also insbesondere Funktionen bezüglich einer Vorhersage von Straßenmerkmalen wie beispielsweise Kreisverkehren.

Idealerweise wird zusätzlich zu jeder Information in der Karte gespeichert, wie oft die Informationen schon bestätigt wurden und wie alt die letzte Bestätigung ist sowie aus welcher Quelle die Bestätigung kommt. Bestätigungen, die vom eigenen Fahrzeug kommen, sind dabei verlässlicher, als beispielsweise Informationen, die per Fahrzeug-zu-X-Kommunikation empfangen wurden.

Sind bereits Kartendaten im Fahrzeug vorhanden, kann das beschriebene Verfahren benutzt werden, um eine Redundanz aufzubauen und damit das Verlässlichkeitslevel (Integritätslevel) der Karteninformationen insgesamt zu erhöhen. Dazu werden die Informationen aus den vorhandenen Daten mit den Daten aus der selbstgelernten Karte verglichen. Stimmen beide überein, so kann ein entsprechendes Integritätslevel ausgegeben werden. Sind nur Kartendaten vorhanden und keine selbstgelernte Karte, so wird bevorzugt ein entsprechend niedrigeres Integritätslevel ausgegeben. Sind nur selbstgelernte Kartendaten und keine anderen Kartendaten vorhanden, so wird bevorzugt ebenfalls ein entsprechendes Integritätslevel ausgegeben, das jedoch höher ist als das Integritätslevel mit Karte aber ohne selbstgelernte Karte. Sind in den Kartendaten von der selbstgelernten Karte abweichende Daten gespeichert, beispielsweise weil die Karte zusätzlich noch die Anzahl der Fahrspuren hat, so findet vorzugsweise eine Fusion der Informationen statt. Dabei wird bei jedem Datum, das nur in einer der beiden Karten vorhanden ist, ein entsprechendes Integritätslevel mit angegeben.

Das beschriebene Verfahren zum Lernen einer Karte kann auch genutzt werden, um ausschließlich Sondersituationen zu behandeln. Die "normale" Topologie der Straße, also der Stra-ßenverlauf, kann über klassische Verfahren gelernt und als Abfolge von Knotenpunkten und Verbindungen beschrieben werden (oder als Polygone, Splines, u.s.w.). Nur an Situationen, wo diese Darstellung zu einer falschen Vorhersage der Situation führt, wird beispielsweise wie im beschriebenen Verfahren dargestellt, zusätzlich die Information gespeichert, die notwendig ist, um die Situation richtig vorherzusagen.

Die Erfindung betrifft des Weiteren eine elektronische Steuerungsvorrichtung, welche dazu konfiguriert ist, ein erfindungsgemäßes Verfahren auszuführen. Außerdem betrifft die Erfindung ein computerlesbares Speichermedium, welches Programmcode enthält, bei dessen Ausführung ein Prozessor ein erfindungsgemäßes Verfahren ausführt. Hinsichtlich des Verfahrens kann dabei auf alle beschriebenen Ausführungen und Varianten zurückgegriffen werden.

Weitere Merkmale und Vorteile wird der Fachmann den nachfolgend mit Bezug auf die beigefügte Zeichnung beschriebenen Ausführungsbeispielen entnehmen. Dabei zeigen:

Fig. 1:    eine Situation mit einem Fahrzeug und einer kurvigen Straße,

Fig. 2:    eine Situation mit zwei Straßen und zwei Fahrzeugen,

Fig. 3:    eine Vorrichtung zur Durchführung des erfindungsgemäßen Verfahrens, und

Fig. 4:    einen prinzipiellen Ablauf von Lernphasen.

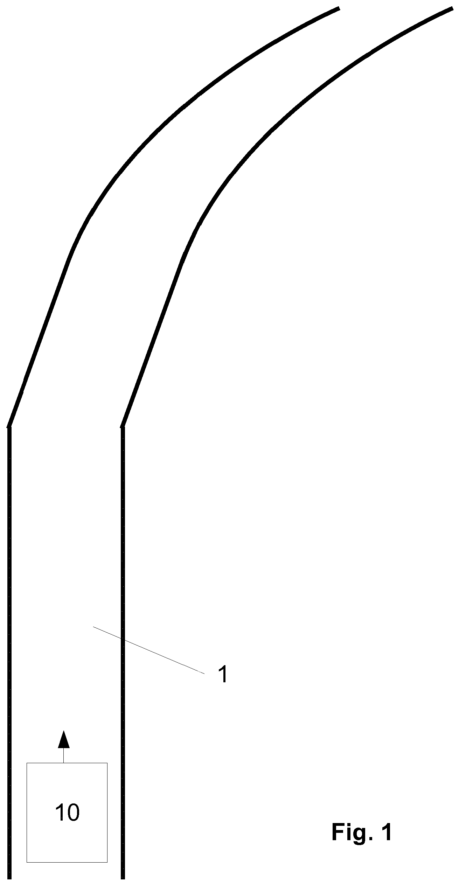

Figur 1 zeigt eine Situation, in welcher ein Fahrzeug 10 auf einer Straße 1 fährt. Das Fahrzeug 10 bewegt sich geradeaus und nähert sich einer Kurve in der Straße 1. Auf Basis der aktuellen Bewegungsdaten wird eine weitere Geradesaufahrt prädiziert. Sobald das Fahrzeug 10 in die Kurve fährt, passen Prädiktion und gefahrene Strecke nicht mehr zusammen. Diese Position wird in der Karte gespeichert zusammen mit den Parametern für das Prädiktionsmodell, die notwendig sind, damit die Prädiktion wieder passt.

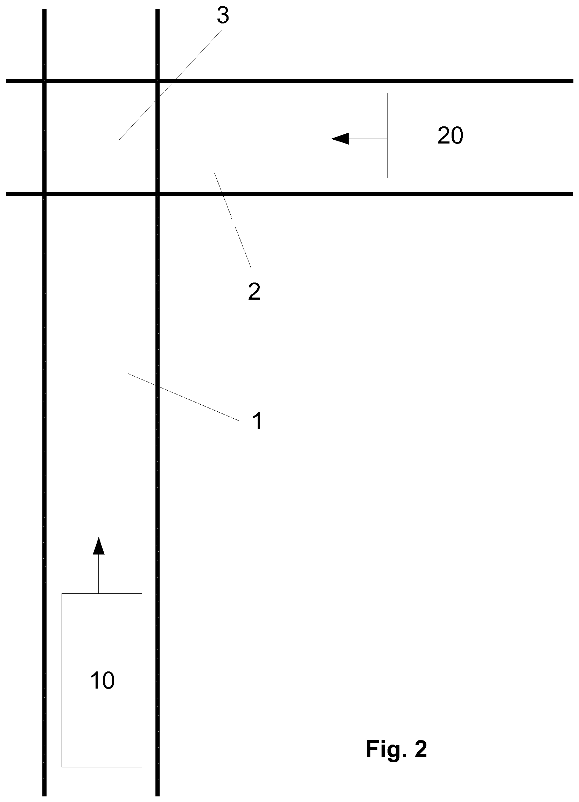

Figur 2 zeigt eine Situation, in welcher sich ein erstes Fahrzeug 10 auf einer ersten Straße 1 einer Kreuzungszone 3 nähert, während sich gleichzeitig ein zweites Fahrzeug 20 auf einer zweiten Straße 2 ebenfalls der Kreuzungszone 3 nähert.

Während sich das erste Fahrzeug 10 der Kreuzungszone 3 nähert, werden über Fahrzeug-zu-X-Kommunikation Informationen des zweiten Fahrzeugs 20 empfangen, das sich ebenfalls der Kreuzungszone 3 nähert, und zwar im 90°-Winkel zum ersten Fahrzeug. Die Prädiktionen für das erste Fahrzeug 10 und das per Fahrzeug-zu-X-Nachrichten identifizierte zweite Fahrzeug 20 gehen jeweils von einer Geradeausfahrt aus. Die Anwendung müsste daraus typischerweise auf eine Kollision schließen, insbesondere unter Berücksichtigung der Abstände und Geschwindigkeiten der Fahrzeuge 10, 20. Aufgrund von Daten anderer Objekte mit Fahrzeug-zu-X-Kommunikationsfähigkeit konnte jedoch darauf geschlossen werden, dass sich die Fahrzeuge 10, 20 an dieser Kreuzungszone nicht treffen werden und diese Information wurde in der selbst gelernten Karte hinterlegt, da sie von der eigentlichen Logik der Anwendung abweicht. Anders ausgedrückt wurde erkannt, dass es sich bei der Kreuzungszone 3 nicht um eine Kreuzung, sondern um eine Überführung handelt, was eine Kollision ausschließt. Aufgrund der Information in der Karte kann die Anwendung die Situation richtig interpretieren und vermeidet eine unnötige Warnung des Fahrers.

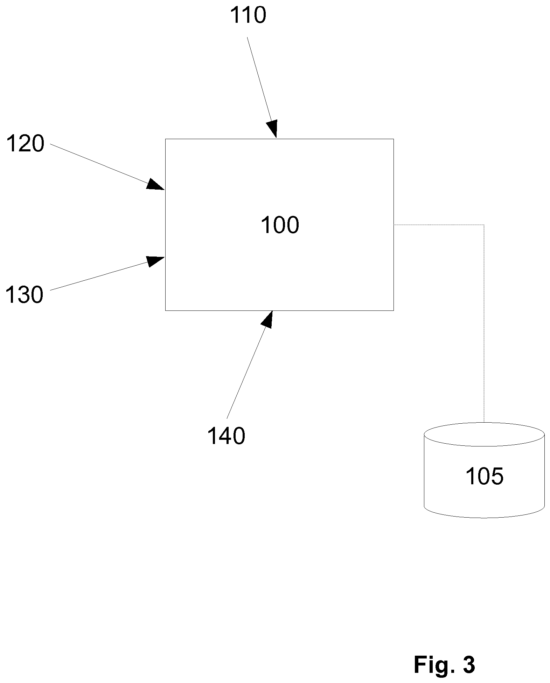

Figur 3 zeigt eine Vorrichtung zur Durchführung des erfindungsgemäßen Verfahrens. Diese weist ein Rechenmodul 100 sowie eine Datenbank 105 auf. Das Rechenmodul 100 ist dazu ausgebildet, das erfindungsgemäße Verfahren wie an anderen Stellen in dieser Anmeldung beschrieben auszuführen. Die Datenbank 105 speichert dabei Informationen, welche entsprechend dem erfindungsgemäßen Verfahren gewonnen wurden. Vorteilhafterweise handelt es sich bei dem Rechenmodul 100 um eine Sensorfusionseinheit. Die Sensorfusionseinheit ist derart ausgelegt unterschiedliche Messgrößen über mehrere voneinander unabhängige Sensoren zu erfassen und diese zu plausibilisieren und die Qualität der Sensordaten zu verbessern.

Das Rechenmodul 100 wird dabei mit unterschiedlichen Daten versorgt.

Zum einen handelt es sich um Daten 110 aus Fahrzeug-zu-X-Kommunikation. Hierbei kann es sich beispielsweise um Fahrtstrecken andere Fahrzeuge, Außenlichter (exteriorLights), Positionsdaten (x, y, z), Zeitdaten (t), Geschwindigkeitsdaten (v), Kurs, Kurvenradius (1/r), Gierrate oder eine ein- oder zweidimensionale Beschleunigung handeln.

Des Weiteren handelt es sich um Daten 120 von lokalen Sensoren wie Kamera oder Radar.

Des Weiteren handelt es sich um Daten 130 von einem System, welches bestimmte Fahrbahnzustände wie beispielsweise Kreuzungen, Kreisverkehre oder andere verkehrsmäßig relevante Situationen voraussagt. Beispielsweise kann es sich dabei um einen eHorizon handeln.

Außerdem handelt es sich um Daten 140 des eigenen Fahrzeugs, beispielsweise Position (x, y, z), Zeit (t), Geschwindigkeit (v), Kurs, Kurvenradius (1/r), ein- zwei- oder dreidimensionale Orientierung, ein- zwei- oder dreidimensionale Raten und/oder ein- zwei- oder dreidimensionale Beschleunigung.

Mittels dieser Daten 110, 120, 130, 140 können sowohl Prädiktionen von Zuständen wie auch Vergleiche zwischen diesen Prädiktionen und tatsächlichen Zuständen durchgeführt werden. Bei solchen Zuständen kann es sich beispielsweise um einen Weg des Fahrzeugs, aber auch um eine Kollision mit einem anderen Fahrzeug handeln. Aus solchen Vergleichen können dann Informationen für eine elektronische Karte gewonnen werden, welche in der Datenbank 105 abgespeichert werden können und für spätere Prädiktionen verwendet werden können.

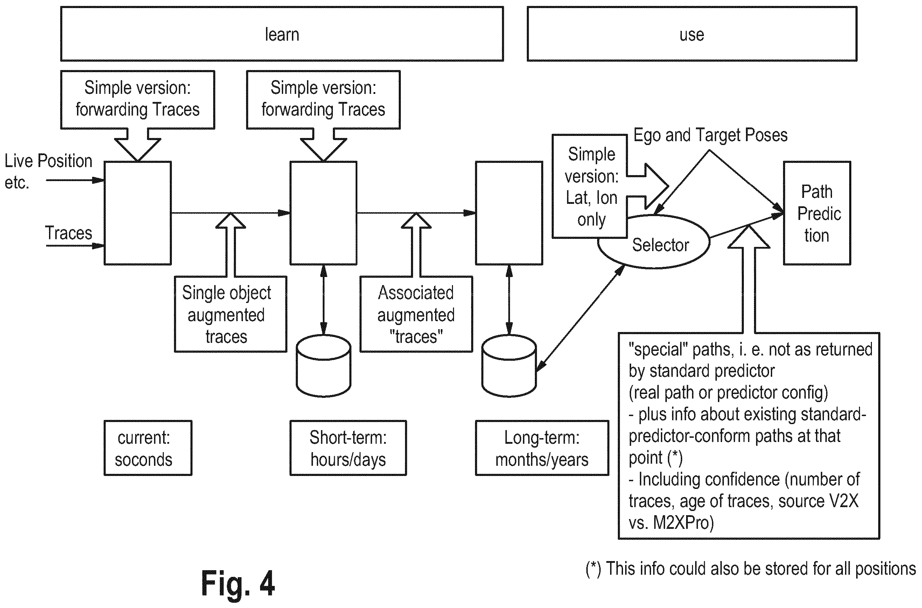

Figur 4 zeigt eine mögliche Architektur oder Systemarchitektur für das beschriebene Verfahren, aufgeteilt in eine Lernphase und eine Anwendungsphase bzw. Einsatzphase, wobei beide Phasen gleichzeitig laufen können.

In der Lernphase ("learn") können insbesondere Eingangsdaten, beispielsweise die weiter oben erwähnten Daten 110, 120, 130, 140 verwendet werden, um die Karten aufzubauen. Dabei werden Informationen gemäß einer Ausführung bzw. Implementierung des erfindungsgemäßen Verfahrens erzeugt und abgespeichert. Die Lernphase ist in diesem Ausführungsbeispiel in mehreren Ebenen gegliedert. Ein Unterscheidungsmerkmal der Ebenen ist der Zeitbezug der Ebenen. In einer ersten Ebene wird eine Lernphase durchlaufen, die mehrere Sekunden umfasst. In dieser Lernphase wird eine einfache Prädiktion der eigenen Position ausgehend von der eigenen Position durchgeführt. In einer zweiten Ebene, welche mehrere Stunden oder Tage umfasst, wird die eigene Position und die Zustandsprädiktion mit einem oder einzelnen Objekten, bspw. aus der Umgebung verknüpft. In einer dritten Ebene, in der Daten über Wochen, Monate oder Jahre gesammelt und genutzt werden, wird eine Umfangreiche Assoziation von Objekten und älteren Zustandsprädiktionen durchgeführt. Diese wiederum können dann genutzt werden, um die Zustandsprädiktion in einer bestimmten Situation präziser zu ermitteln. Die Auswahl des zu prädizierenden Zustands kann dabei besondere Zustände bzw. Pfade, welche eine Besonderheit aufweisen und vom Standard abweichen, bzw. eine hohe Abweichung besitzen gesondert berücksichtigen. In analoger Weise können auch Integritätslevel oder Zuverlässigkeitsbewertungen von älteren Zustandsprädiktionen gesondert berücksichtigt werden, um während der Nutzung die Prädiktion zu verbessern.

Während der Einsatzphase ("use") können insbesondere die Eingangsdaten verwendet werden, um eine Pfadprädiktion oder eine sonstige Prädiktion eines Zustands mit Hilfe der gelernten Karte zu erstellen. Eine solche Prädiktion kann wiederum im Rahmen des erfindungsgemäßen Verfahrens verwendet werden.

Beide Phasen können auch zeitgleich und auch auf Basis derselben Eingangsdaten erfolgen, sie können jedoch auch unabhängig bzw. unterschiedlich, insbesondere zeitlich unterschiedlich, voneinander sein.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden dass keine weiteren Schritte ausgeführt werden. Es können jedoch grundsätzlich auch weitere Schritte ausgeführt werden, auch solche welche nicht erwähnt sind.

## Patentansprüche

1. Verfahren zum Aktualisieren einer elektronischen Karte eines Fahrzeugs (10, 20),

   wobei das Verfahren folgende Schritte aufweist:

   - Berechnen eines prädizierten Zustands des Fahrzeugs (10, 20),
   - Ermitteln eines tatsächlichen Zustands des Fahrzeugs (10, 20),
   - Bestimmen einer Abweichung zwischen prädiziertem Zustand und tatsächlichem Zustand, und
   - Speichern von Informationen in die Karte, wenn prädizierter Zustand und tatsächlicher Zustand voneinander abweichen, wobei der prädizierte Zustand basierend auf der Karte und auf Bewegungsdaten des Fahrzeugs (10, 20), nämlich Position, Geschwindigkeit und/oder Beschleunigung des Fahrzeugs (10, 20), berechnet wird, wobei der Zustand ein Weg des Fahrzeugs (10, 20) ist, wobei der tatsächliche Weg basierend auf Bewegungsdaten des Fahrzeugs (10, 20), nämlich Position, Geschwindigkeit und/oder Beschleunigung, ermittelt wird, **dadurch gekennzeichnet,**

   **dass**

   die Informationen angepasste Werte beinhalten oder sind, mit welchen der prädizierte Weg dem tatsächlichen Weg entsprechen würde.

2. Verfahren nach Anspruch 1,
   wobei der prädizierte Weg zusätzlich basierend auf Daten von anderen Fahrzeugen (10, 20) und/oder basierend auf Daten über eine Umgebung des Fahrzeugs (10, 20), insbesondere von Umfeldsensoren und/oder Fahrzeug-zu-X-Kommunikation, berechnet wird.

3. Verfahren nach einem der vorhergehenden Ansprüche,
   wobei der prädizierte Weg unter Verwendung eines oder mehrerer der folgenden Prädiktionsmodelle berechnet wird:

   - Kinematisches Modell 1. Ordnung (Constant Velocity, CV)
   - Kinematisches Modell 2. Ordnung (Constant Acceleration, CA)
   - Constant Turn Rate and Velocity (CTRV)
   - Constant Turn Rate and Acceleration (CTRA)
   - Constant Steering Angle and Velocity (CSAV)
   - Constant Steering Angle and Acceleration (CSAA)
   - Prädiktionsmodell mit geschätztem Krümmungsverlauf, insbesondere aus einer Gierrate
   - Manöverabhängige Prädiktion
   - Neuronales Netz
   - Support Vector Machine
   - Polynom n-ten Grades
   - Stillstandsvorhersage.

4. Verfahren nach einem der vorhergehenden Ansprüche,
   wobei der tatsächliche Weg zusätzlich basierend auf Daten von anderen Fahrzeugen (10, 20) und/oder basierend auf Daten über eine Umgebung des Fahrzeugs (10, 20), insbesondere von Umfeldsensoren und/oder Fahrzeug-zu-X-Kommunikation, ermittelt wird.

5. Verfahren nach einem der vorhergehenden Ansprüche,
   wobei der Schritt des Speicherns von Informationen nur dann ausgeführt wird, wenn die Abweichung einen Schwellenwert überschreitet.

6. Verfahren nach einem der vorhergehenden Ansprüche,

   wobei in der Karte Hinweise auf Regionen mit gespeicherten Informationen gespeichert werden;

und/oder
wobei in der Karte mit den Informationen Hinweise zur Speicherzeit, zu einer Anzahl von Bestätigungen, zu einem Integritätslevel und/oder zum Ursprung einer Information oder Bestätigung gespeichert werden;
und/oder
wobei ein Integritätslevel basierend auf einem Vergleich einer basierend auf den Informationen erstellten Karte mit einer anderen Karte ermittelt wird.

7. Verfahren nach einem der vorhergehenden Ansprüche,
wobei die Karte eine Straßentopologie beinhaltet, welche insbesondere um die Informationen angereichert werden kann.

**Claims**

1. A method for updating an electronic map of a vehicle (10, 20),
wherein the method comprises the following steps:

   - calculating a predicted state of the vehicle (10, 20),
   - determining an actual state of the vehicle (10, 20),
   - determining a deviation between the predicted state and the actual state and
   - storing information into the map if the predicted state and the actual state diverge, wherein the predicted state is calculated based on the map and on movement data of the vehicle (10, 20), namely position, speed and/or acceleration of the vehicle (10, 20), wherein the state is a path of the vehicle (10, 20), wherein the actual path is determined based on movement data of the vehicle (10, 20), namely position, speed and/or acceleration, **characterised in that** the information includes or is adjusted values with which the predicted path would correspond to the actual path.

2. The method of claim 1,
wherein the predicted path is additionally calculated based on data from other vehicles (10, 20) and/or based on data about an environment of the vehicle (10, 20), in particular from environmental sensors and/or vehicle-to-X communication.

3. The method of any one of the preceding claims,
wherein the predicted path is calculated using one or more of the following prediction models:

   - first-order kinematic model (constant velocity, CV)

   - second-order kinematic model (constant acceleration, CA)
   - constant turn rate and velocity (CTRV)
   - constant turn rate and acceleration (CTRA)
   - constant steering angle and velocity (CSAV)
   - constant steering angle and acceleration (CSAA)
   - prediction model with estimated curvature, in particular from a yaw rate
   - manoeuvre-dependent prediction
   - neural network
   - support vector machine
   - nth degree polynomial
   - downtime prediction.

4. The method of any one of the preceding claims,

   wherein the actual path is additionally calculated based on data from other
   vehicles (10, 20) and/or based on data about an environment of the vehicle (10, 20), in particular from environmental sensors and/or vehicle-to-X communication.

5. The method of any one of the preceding claims,
wherein the step of storing information is only performed if the deviation exceeds a threshold value.

6. The method of any one of the preceding claims,

   wherein the map stores references to regions with stored information;
   and/or
   wherein the map containing the information stores information on storage time, a number of confirmations, an integrity level and/or the origin of an information or confirmation;
   and/or
   wherein an integrity level is determined based on a comparison of a map created based on the information and another map.

7. The method of any one of the preceding claims,
wherein the map contains a road topology which can in particular be enriched with the information.

**Revendications**

1. Procédé pour mettre à jour carte électronique d'un véhicule (10, 20),

   dans lequel le procédé présente les étapes suivantes :

   - le calcul d'un état prédit du véhicule (10, 20),
   - la détermination d'un état réel du véhicule (10, 20),
- la détermination d'un écart entre l'état prédit et l'état réel, et
- la sauvegarde d'informations sur la carte lorsque l'état prédit et l'état réel diffèrent,

dans lequel l'état prédit est calculé sur la base de la carte et de données de mouvement du véhicule (10, 20), à savoir la position, la vitesse et/ou l'accélération du véhicule (10, 20), dans lequel l'état est un trajet du véhicule (10, 20), dans lequel le trajet réel est déterminé sur la base de données de mouvement du véhicule (10, 20), à savoir la position, la vitesse et/ou l'accélération, **caractérisé en ce que** les informations comportent ou sont des valeurs ajustées avec lesquelles le trajet prédit correspondrait au trajet réel.

2. Procédé selon la revendication 1, dans lequel le trajet prédit est en outre calculé sur la base de données provenant d'autres véhicules (10, 20) et/ou sur la base de données concernant un environnement du véhicule (10, 20), en particulier provenant de capteurs environnementaux et/ou d'une communication véhicule-X.

3. Procédé selon l'une des revendications précédentes, dans lequel le trajet prédit est calculé à l'aide d'un ou de plusieurs des modèles de prédiction suivants :

   - Modèle cinématique de premier ordre (vitesse constante, CV)
   - Modèle cinématique de second ordre (accélération constante, CA)
   - Taux et vitesse de virage constants (CTRV)
   - Taux de virage et accélération constants (CTRA)
   - Angle et vitesse de braquage constants (CSAV)
   - Angle de braquage et accélération constants (CSAA)
   - Modèle de prédiction avec courbure estimée, en particulier à partir d'un taux de lacet
   - Prédiction dépendante de la manœuvre
   - Réseau neuronal
   - Machine à vecteurs de support
   - Polynôme de degré n
   - Prévision des temps d'arrêt.

4. Procédé selon l'une des revendications précédentes,

   dans lequel le trajet réel est en outre déterminé sur la base de données provenant d'autres véhicules (10, 20) et/ou sur la base de données concernant un environnement du véhicule (10, 20), en particulier provenant de capteurs environnementaux et/ou d'une communication véhicule-X.

5. Procédé selon l'une des revendications précédentes, dans lequel l'étape de stockage des informations n'est effectuée que si l'écart dépasse un seuil.

6. Procédé selon l'une des revendications précédentes,

   dans lequel des références aux régions avec des informations stockées sont stockées sur la carte ;
   et/ou
   dans lequel des informations sur la durée de conservation, un nombre de confirmations, un niveau d'intégrité et/ou l'origine d'une information ou d'une confirmation sont stockées sur la carte contenant les informations ;
   et/ou
   dans lequel un niveau d'intégrité est déterminé sur la base d'une comparaison d'une carte créée sur la base des informations avec une autre carte.

7. Procédé selon l'une des revendications précédentes, dans lequel la carte contient une topologie routière, qui peut être enrichie en particulier avec les informations.

1

10

**Fig. 1**

**Fig. 2**

110

120

100

130

140

105

**Fig. 3**

learn

use

Simple version: forwarding Traces

Simple version: forwarding Traces

Live Position etc.

Traces

Single object augmented traces

Associated augmented "traces"

Simple version: Lat, lon only

Ego and Target Poses

Selector

Path Prediction

"special" paths, i. e. not as returned by standard predictor
(real path or predictor config)
- plus info about existing standard-predictor-conform paths at that point (*)
- Including confidence (number of traces, age of traces, source V2X vs. M2XPro)

current: soconds

Short-term: hours/days

Long-term: months/years

(*) This info could also be stored for all positions

**Fig. 4**

EP 3 356 766 B1

**EP 3 356 766 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2997183 A1
- EP 0921509 A2
- DE 102007006870 A1